# EUROPEAN PATENT APPLICATION

(11) **EP 1 531 087 A1**
(43) Date of publication of application: **18.05.2005**
(21) Application number: 04027200.7
(22) Date of filing: 16.11.2004
(51) Int. Cl.: B60R 11/02

(54) **Case for carrying and mounting an image system in a car**

(30) Priority: 17.11.2003 KR 2003081147; 17.11.2003 KR 2003081214; 17.11.2003 KR 2003081216; 17.11.2003 KR 2003081217; 17.11.2003 KR 2003081220; 17.11.2003 KR 2003081221
(71) Applicant: Daewoo Electronics Corporation, Seoul (KR)
(72) Inventor: Lee, Jung-Hoon, c/o Daewoo Electronics Corp., Seoul (KR); Kim, Eun Sung, c/o Daewoo Electr. Corp., Seoul (KR); Seo, Chang Keun, c/o Daeawoo Elect. Corp., Seoul (KR); Cho, Hyun Ki, c/o Daewoo Electr. Corp., Seoul (KR)
(74) Representative: Turi, Michael, Dipl.-Phys.

(57) **Abstract**

A case (100) for carrying and mounting an image system in a car, includes a case member (105) having a first case body (110) for housing a display device (1) of the image system detachably secured therein and a second case body (120) for housing an image reproducing device (2) of the image system detachably secured therein, an installation unit (130) connected to at least one of the first and the second case body to mount the case member to a seat (3) in the car detachably, and a combining member (140) for selectively combining the first and the second case body with each other. The first case body and the second case body are rotatably connected to each other, and are arranged in front and rear, respectively when being combined via the combining member.

## Description

The present invention relates to a case for carrying and mounting an image system in a car; and, more particularly, to a case for carrying and mounting an image system in a car, which is capable of accommodating an image reproducing device and a display device therein while allowing them to be carried safely and conveniently, and capable of being detachably mounted to a seat in a car while allowing an easy opening thereof to a user.

With a recent trend for installing a display device, i.e., a monitor, in a car to allow a passenger to watch TV or video and enjoy a game in the car, various AV systems equipped with display devices are mounted in the car.

Such AV systems are implemented by appropriately combining a liquid crystal display of a touch screen type, a video system, an audio system, a CD (compact disk) changer, a navigation system, a DVD (digital versatile disk) player, a satellite broadcasting set-top box, and the like, and are endowed with diversified and improved functions to support Internet, wireless telecommunications, voice recognition and character-voice conversion, etc., in addition to a function to do navigation.

In general, most of the AV systems for a car are installed in the car by an 'on-dash' type or an 'in-dash' type mounting scheme. With regard to the on-dash type scheme, an AV system is secured/coupled on a dashboard of a car. In the in-dash type scheme, on the other hand, the AV system is installed inside the dashboard and a monitor is projected upward when a power button is pressed.

However, since such mounting methods for the car AV system are more complicated than those for the installation of general household AV systems, general users other than experts have many difficulties in installing the car AV systems, and have to get it done by, for example, an AV system service agent. Furthermore, such mounting methods are disadvantageous in that they cannot satisfy the increasing demand to install a large-size liquid crystal display not smaller than 7-inch in the car.

Accordingly, systems for carrying and detachably mounting the AV systems in the car have been utilized, and one example of such systems is disclosed in U.S. Patent No. 6,092,705, entitled "SELF-CONTAINED CASE FOR HOUSING TRANSPORTING AND MOUNTING VIDEO MONITOR AND VIDEO PLAYER FOR USE IN PASSENGER VEHICLES", which was filed on January 25, 1999.

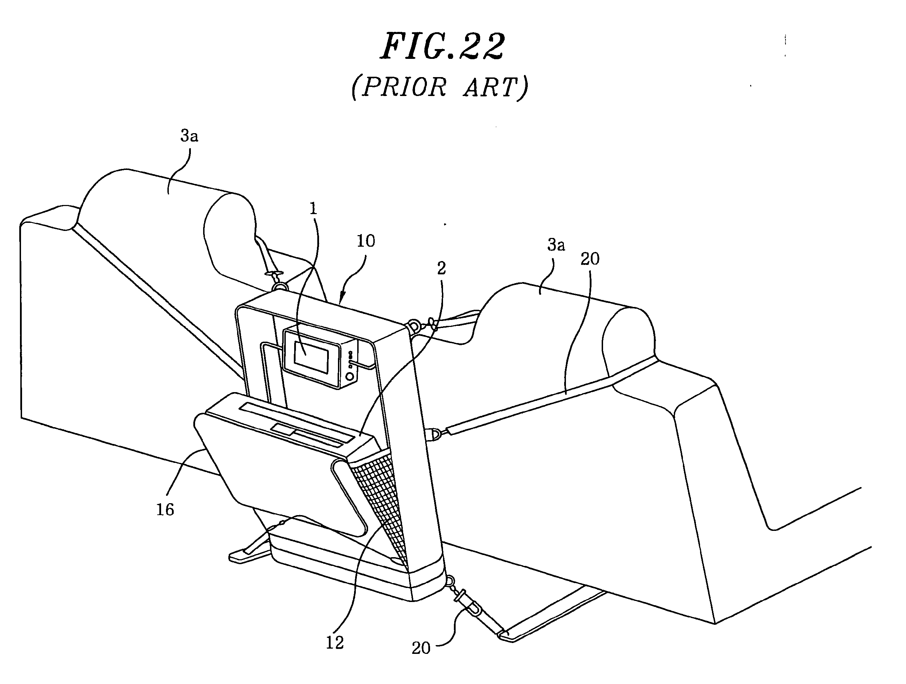

Fig. 22 is a perspective view of a conventional mounting system that is secured inside the car, disclosed in U.S. Patent No. 6,092,705. The mounting system allows entertainment video accessories to be detachably and securely mounted inside the car. The mounting system includes a rectangular case 10 elongated in a vertical direction, for housing video accessories; and quick connect members 20 for detachably securing the case 10 to a seat of the car.

A front panel 16 and mesh side panels 12 connected to each other are attached to the case 10 to open or close an upper and a lower portion of the case 10. The mesh side panels 12 can be moved outwardly at a predetermined angle in order to allow the passenger to access the video accessories easily. An image reproducing device 2 is mounted in a lower inner portion of the case 10, and a display device 1 is mounted to an upper inner portion of the case 10 via a mounting unit (not shown) and receives signals from the image reproducing device 2. By folding the front panel 16, the upper portion of the case 10 is opened and the display device 1 is exposed.

The quick connect members 20 are detachably connected and fastened at positions close to all of the internal floor, a first and a second headrest 3a of the car.

However, carrying the case 10 is not convenient because of its long length and there is likelihood that the video accessories accommodated in the case 10 are damaged by collision of the case 10 against a projection portion of the road while it is being carried. Moreover, it is rather troublesome and time-consuming to open the front panel 16 that covers the upper and the lower portion of the case 10.

It is, therefore, an object of the present invention to provide a case for carrying and mounting an image system in a car, which can be carried safely and conveniently, and opened easily.

In accordance with the present invention, there is provided a case for carrying and mounting an image system in a car, the case including: a case member including a first case body for housing a display device of the image system detachably secured therein and a second case body for housing an image reproducing device of the image system detachably secured therein; an installation unit connected to at least one of the first and the second case body to mount the case member to a seat in the car detachably; and a combining member for selectively combining the first and the second case body with each other, wherein the first case body and the second case body are rotatably connected to each other, and are arranged in front and rear, respectively when being combined via the combining member.

The above and other objects and features of the present invention will become apparent from the following description of preferred embodiments given in conjunction with the accompanying drawings, in which:
Fig. 1 is a front perspective view of a case for carrying and mounting an image system in a car in accordance with a first preferred embodiment of the present invention when the case is in a carrying mode;
Fig. 2 presents a rear perspective view of the case for carrying and mounting an image system in a car in accordance with the first preferred embodiment of the present invention when the case is in the carrying mode;
Fig. 3 sets forth a front perspective view of the case for carrying and mounting an image system in a car in accordance with the first preferred embodiment of the present invention when the case is in an operational mode;
Fig. 4 provides a front perspective view of the case for carrying and mounting an image system in a car in accordance with the first preferred embodiment of the present invention when the case is in an installation mode;
Fig. 5 shows a front perspective view of a case for carrying and mounting an image system in a car in accordance with a second preferred embodiment of the present invention when the case is in a carrying mode with an installation unit connected to a case member;
Fig. 6 offers a front perspective view of the case for carrying and mounting an image system in a car in accordance with the second preferred embodiment of the present invention when the case is in the operational mode with an image reproducing device detached from a second case body;
Fig. 7 is a cross sectional view of the case for carrying and mounting an image system in a car in accordance with the second preferred embodiment of the present invention when the case is in the operational mode with the image reproducing device extracted from the second case body;
Fig. 8 illustrates a cross sectional view of the case for carrying and mounting an image system in a car in accordance with the second preferred embodiment, when the case is in the operational mode with the image reproducing device retracted in the second case body;
Fig. 9 presents a front perspective view of the case for carrying and mounting an image system in a car in accordance with the second preferred embodiment of the present invention when the case is in the installation mode;
Fig. 10 depicts a front perspective view of a case for carrying and mounting an image system in a car in accordance with a third preferred embodiment of the present invention when the case is in the carrying mode;
Fig. 11 sets forth a front perspective view of the case for carrying and mounting an image system in a car in accordance with the third preferred embodiment of the present invention when the case is in the operation mode;
Fig. 12 shows a front perspective view of the case for carrying and mounting an image system in a car in accordance with the third preferred embodiment of the present invention when the case is in the installation mode;
Fig. 13 is a front perspective view of a mounting unit;
Fig. 14 sets forth a partial perspective view of a case for carrying and mounting an image system in a car in accordance with a first modified embodiment of the present invention;
Fig. 15 depicts a perspective view of a case for carrying and mounting an image system in a car in accordance with a second modified embodiment of the present invention when the case is in the carrying mode with the installation unit connected to a case member;
Fig. 16 presents a perspective view of the case for carrying and mounting an image system in a car in accordance with the second modified embodiment of the present invention when the case is in the installation mode;
Fig. 17 offers a perspective view of an installation unit formed of a plate provided with a plurality of rings, and hooks connected to the case member;
Fig. 18 is a perspective view of the case detachably mounted to a seat via the installation unit of Fig. 17;
Fig. 19 provides a front perspective view of an installation unit formed of a seat cover for covering a seat, and a securing member having fixing buttons;
Fig. 20 shows a front perspective view of the installation unit formed of the seat cover and a securing member having a fastening tape;
Fig. 21 is a perspective view of a case detachably mounted to a seat via the installation unit of Fig. 19; and
Fig. 22 is a perspective view of a conventional mounting system that is secured inside a car.

Hereinafter, the preferred embodiments of the present invention will be described with reference to the accompanying drawings.

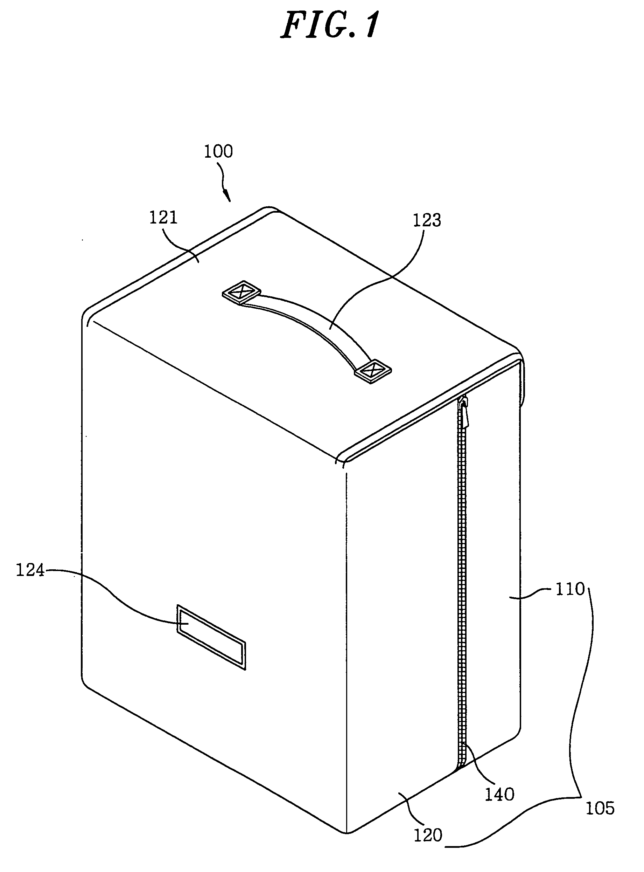

Referring to Figs. 1 to 4, a first preferred embodiment of the present invention will now be described in detail.

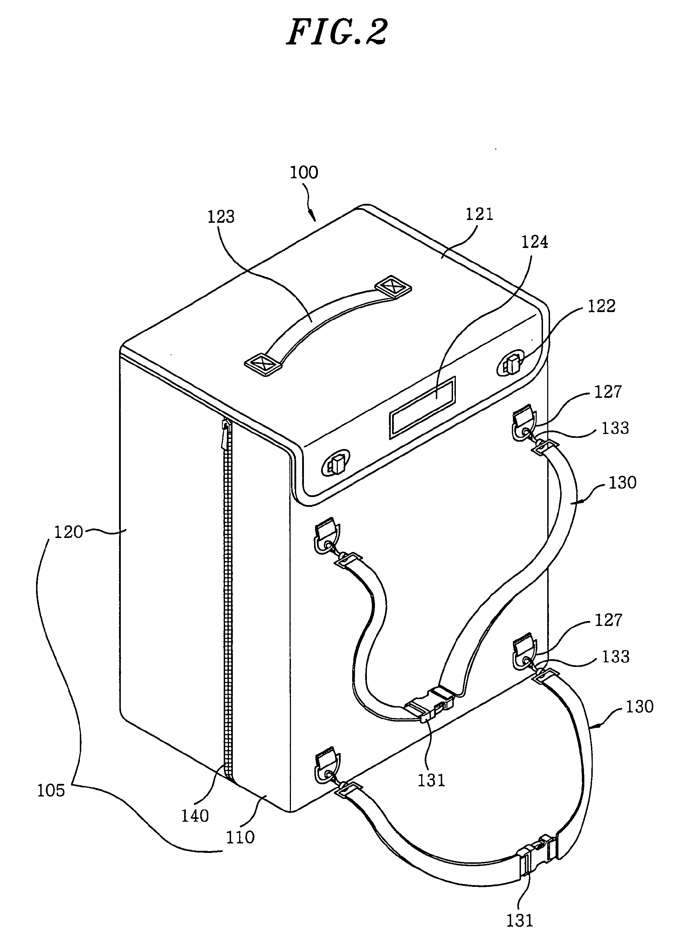

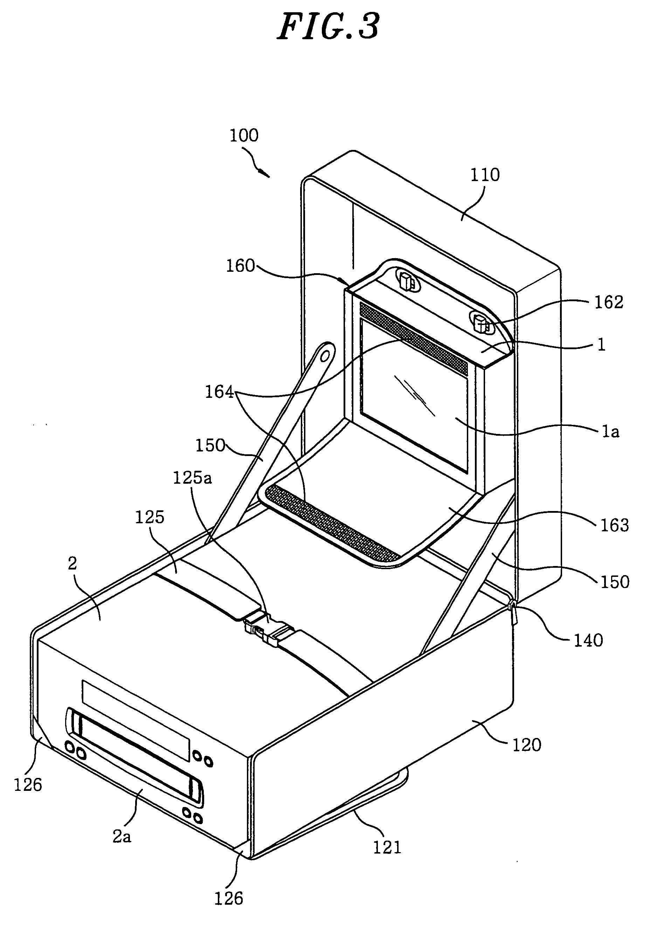

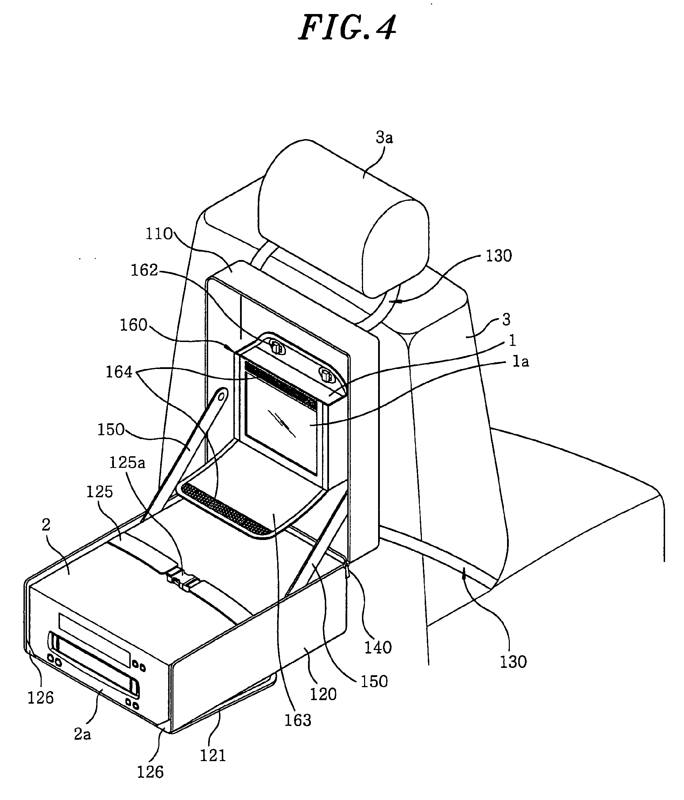

Fig. 1 is a front perspective view of a case for carrying and mounting an image system in a car in accordance with the first preferred embodiment of the present invention, which is in a carrying mode, and Fig. 2 is a rear perspective view thereof. Further, Figs. 3 and 4 are front perspective views of the case for carrying and mounting an image system in a car in accordance with the first preferred embodiment of the present invention, which is in an operational mode and an installation mode, respectively.

As shown therein, the case 100 for carrying and mounting an image system in a car in accordance with the first preferred embodiment of the present invention has the carrying mode for accommodating a display device 1 and an image reproducing device 2 therein to allow them to be carried, the operational mode for allowing a user to watch the display device 1, and the installation mode in which the case 100 is detachably mounted to a backside of a seat in the car and allows the user seated in a rear seat in the car to watch the display device 1.

The case 100 in accordance with the first preferred embodiment of the present invention includes a case member 105 having a first case body 110 for housing the display device 1 detachably secured therein and a second case body 120 for housing the image reproducing device 2 detachably secured therein; an installation unit connected to at least one of the first and the second case body 110 and 120 to mount the case member 105 to the seat in the car detachably; and a combining member 140 for selectively combining the first and the second case body 110 and 120 with each other. Here, the first case body 110 and the second case body 120 are rotatably connected to each other. When the second and the first case body 120 and 110 are combined with each other via the combining member 140, they are arranged in front and rear, respectively (i.e., in a thickness direction of the case member 105).

The display device 1 is generally constituted by an LCD (liquid crystal display) monitor, an LCD television, a CRT (cathode ray tube) television, a plasma television or the like, while the image reproducing device 2 is generally constituted by a video cassette player (VCP), a DVD (digital versatile disk) player or a combination thereof. The display device 1 and the image reproducing device 2 are main elements of the image system. The display device 1 receives video and audio signals from the image reproducing device 2 via one or more cables (not shown) and outputs videos and audios.

The first case body 110 is provided with an opening on a side which is brought into contact with the second case body 120 in the carrying mode. The display device 1 is detachably mounted on an inner surface of the first case body 110 through this opening such that a screen 1a of the display device 1 is exposed through the opening.

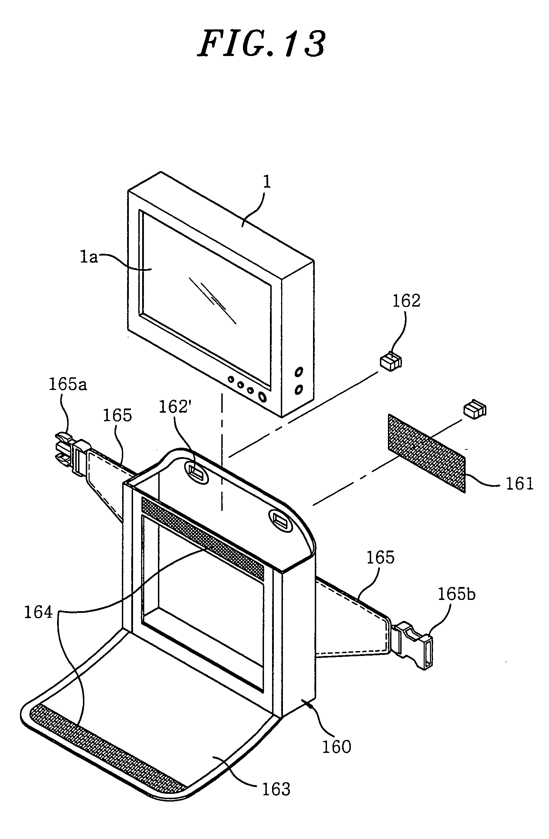

At this time, in order to mount the display device 1 to the first case body 110, it is preferable to employ a mounting unit 160 (see Fig. 13) which is capable of being detachably secured to the inner surface of the first case body 110 or to a headrest 3a.

As shown in Fig. 13, the mounting unit 160 envelops the display device 1 inserted thereinto via an opening formed in its top portion and is detachably secured to the inner surface of the first case body 110 by allowing a fastening tape (not shown), e.g., a hook and loop fastener, provided on a rear surface of the mounting unit 160 and a pair of engagement holes 162' provided on an upper rear wall of the mounting unit 160 to be connected to a fastening tape 161 and engagement buttons 162 provided on the inner surface of the first case body 110, respectively. Further, a protective flap 163 of the mounting unit 160 can be opened or closed by separating or combining a pair of fastening tapes 164 provided on its free end portion and an upper front wall of the mounting unit 160, while covering or uncovering a transparent portion or an opening formed in the front wall to expose the screen 1a of the display device 1. Furthermore, the mounting unit 160 can be detachably mounted to the headrest 3a of the seat 3 in the car by using a fastening strap 165 with buckle members 165a and 165b.

A lower edge of the side having the opening formed therein of the first case body 110 is rotatably connected to a lower edge of the second case body 120. In the operational mode, the first and the second case body 110 and 120 are opened to form an angle of about 90°. That is, an operation angle formed between the first and the second case body 110 and 120 in the operational mode of the case 100 is about 90°. At this time, a control panel 2a of the image reproducing device 2 detachably mounted in the second case body 120 faces toward the direction in which the screen 1a of the display device 1 is oriented, and an upper cover 121 attached to an upper end of a front wall of the second case body 120 is opened and detachably attached to the second case body 120 via fastening tapes 124 provided on a free end portion of a outer surface of the upper cover 121 and a lower portion of a front surface of the second case body 120.

The operation angle of the case 100 is confined by the presence of a pair of fixing straps 150, wherein both ends of each fixing strap 150 are coupled to inner surfaces of side walls of the first case body 110 and the second case body 120, respectively.

In the carrying mode, i.e., when the first and the second case body 110 and 120 are closed, the free end of the upper cover 121 is detachably secured to the first case body 110 while covering top portions of the first and the second case body 110 and 120. So, the upper cover 121 serves to combine the first and the second case body 110 and 120. Furthermore, a handle 123 is provided on the upper cover 121 to allow a user to carry the case 100 conveniently in the carrying mode.

The second case body 120 has a fastening belt 125 for fastening the image reproducing device 2 disposed inside the second case body 120. The fastening belt 125, whose opposite ends are attached to side walls of the second case body 120, respectively, is provided with a buckle 125a. Further, the second case body 120 has stop members 126 formed at upper corner portions thereof in order to prevent the image reproducing device 2 from being removed unintentionally from the second case body 120 and the fastening belt 125 when the mode of the case 100 is changed from the carrying mode to the operational mode.

The installation unit for securing the case member 105 to the seat in the car is constituted by at least one (two, in this preferred embodiment) mounting strap 130 and rings 127 provided at four corner portions of the rear surface of the first case body 110.

Each mounting strap 130 has a buckle 131 and hooks 133, which can be selectively fastened to or separated from the rings 127, wherein the hooks 133 are respectively provided at both ends of each mounting strap 130.

A combining member 140 for selectively combining the first and the second case body 110 and 120 with each other is preferably a zipper installed in the opened edge portions of the first and the second case body 110 and 120 that are brought into contact with each other in the carrying mode.

Hereinafter, operation of the case 100 for carrying and mounting an image system in a car in accordance with the first preferred embodiment of the present invention will be described.

First, the display device 1 is inserted into the mounting unit 160 such that the screen 1a of the display device 1 faces the front wall of the mounting unit 160. Then, the mounting unit 160 enveloping the display device 1 is detachably secured to the inner surface of the first case body 110, and the image reproducing device 2 is secured in the second case body 120 via the fastening belt 125 such that the control panel 2a of the image reproducing device 2 faces toward the direction in which the screen 1a is oriented.

Thereafter, the first and the second case body 110 and 120 housing the display device 1 and the image reproducing device 2, respectively, are combined with each other via the combining member 140, i.e., the zipper, such that they are arranged in front and rear, respectively, and the upper cover 121 of the second case body 120 is fastened to the first case body 110 via engagement buttons 122 provided on the rear surface of the first case body 110. Through these steps, the mode of the case 100 for carrying and mounting the image system in a car is changed to the carrying mode. By grasping the handle 123 or by using a carrying strap (not shown) connected to the rings 127, the user can carry or move the case 100 to a desired place.

In case of changing the mode of the case 100 from the carrying mode to the installation mode, the mounting straps 130 are connected to the rings 127 secured to the rear surface of the first case body 110 and are wounded around the headrest 3a and the seat 3, rendering the case 100 detachably mounted to the backside of the seat 3. Thereafter, the front flap 121 is detached from the first case body 110 and is fastened to the front surface of the second case body 120 via the fastening tapes 124. Afterward, the combining member 140, i.e., the zipper, is released and the second case body 120 is rotated forwardly from the first case body 110. The second case body 120 is rotated at the operation angle of about 90°, and is stopped by the fixing straps 150, so that the opening of the first case body 110 is uncovered.

Then, the protective flap 163 of the mounting unit 160 detachably secured to the inner surface of the first case body 110 is opened forwardly, thereby uncovering the screen 1a of the display device 1. Then, power is supplied to the image reproducing device 2 and the display device 1. Through these steps, the mode of the case 100 is changed from the carrying mode to the installation mode as shown in Fig. 4, allowing the user to watch the display device 1 while seated in the rear seat in the car.

Further, in case of mounting the display device 1 to the headrest 3a, the mounting unit 160 is separated from the first case body 110, and the fastening strap 165 of the mounting unit 160 is fastened to the headrest 3a.

Moreover, when the mode of the case 100 is changed to the carrying mode, the mounting straps 130 once used to secure the case member 105 of the case 100 to the seat 3 in the car are separated from the rings 127 attached to the first case body 110 to be stored in a pocket (not shown) provided inside the first case body 110.

As described above, when the case 100 for carrying and mounting an image system in a car in accordance with the first preferred embodiment of the present invention is in the carrying mode, the second and the first case body 120 and 110 are arranged in front and rear, respectively. Thus, when compared with the conventional mounting system having the display device and the image reproducing device arranged in top and bottom, the vertical length of the case 100 can be reduced, which can allow the user to carry the case 100 safely and conveniently. Furthermore, since the operation length of the zipper of the combining member 140 can also be reduced, the opening of the first and the second case body 110 and 120 can be accomplished readily.

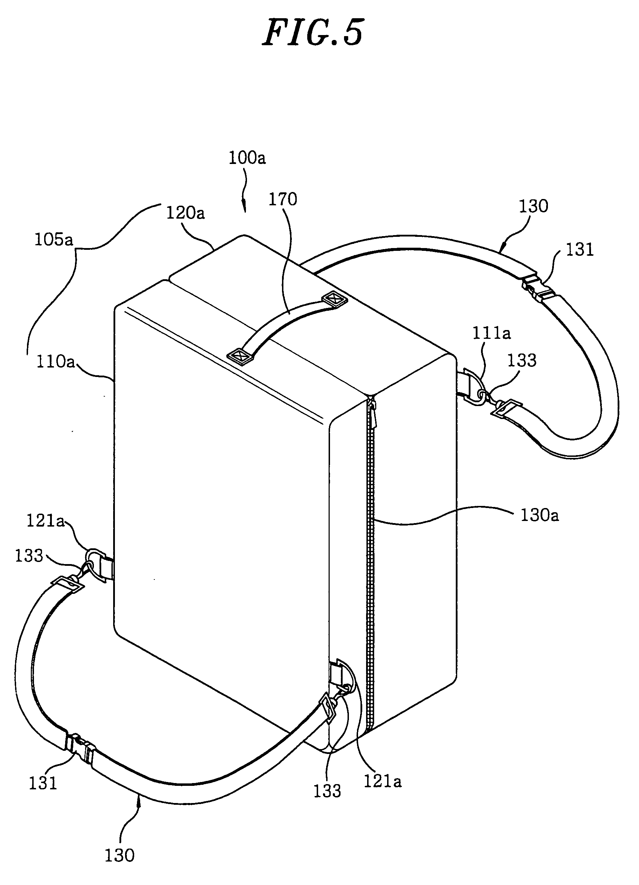

Hereinafter, a second preferred embodiment of the present invention will now be described in detail with reference to Figs. 5 to 9, wherein like parts to those of the first preferred embodiment are represented by like reference characters and detailed descriptions thereof will be omitted.

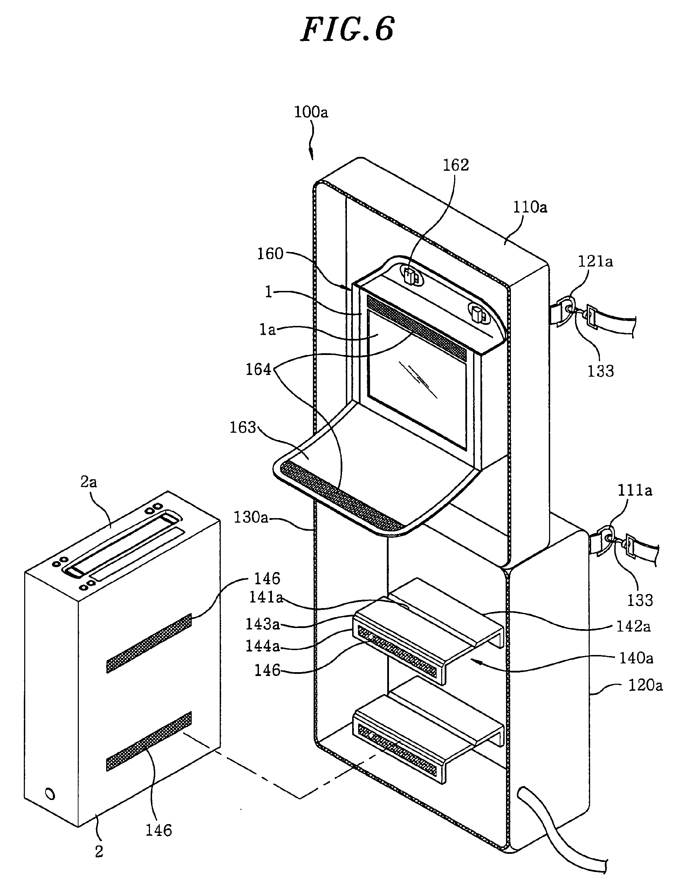

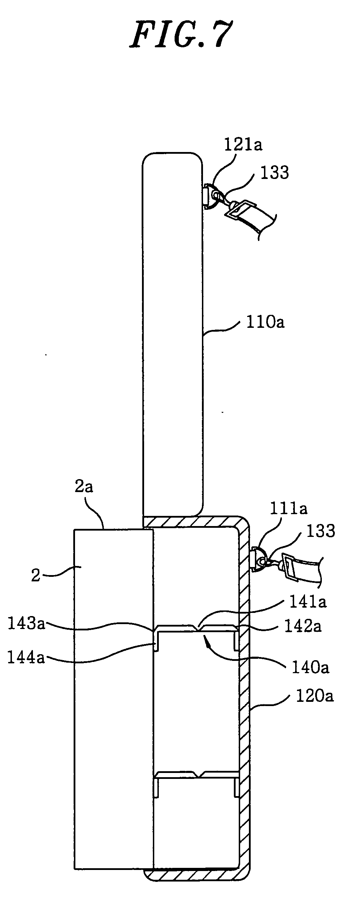

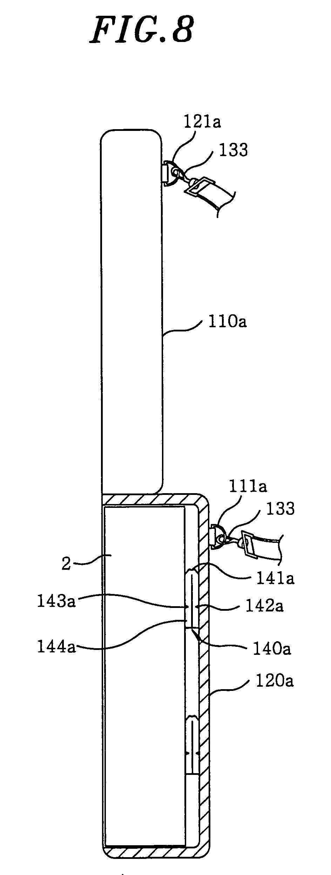

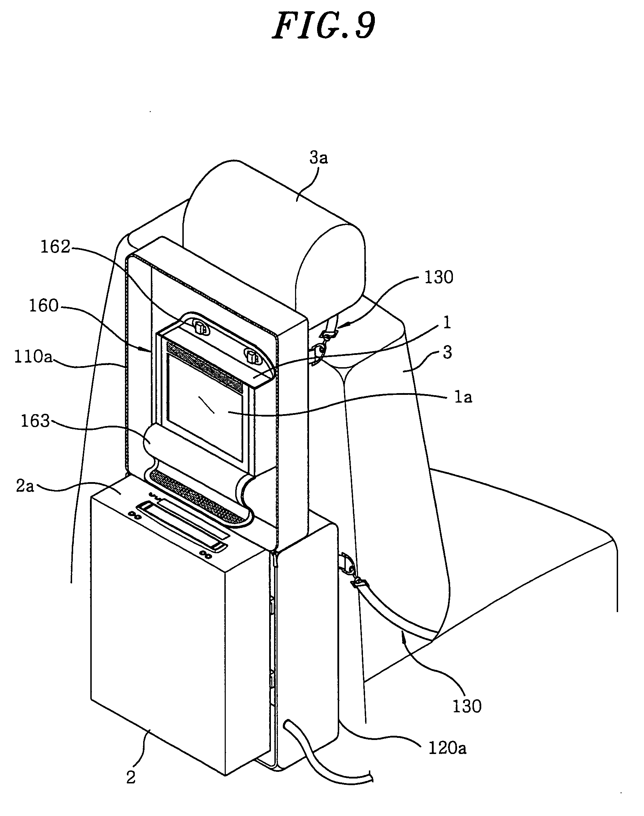

Referring to Fig. 5, there is provided a front perspective view of a case 100a for carrying and mounting an image system in a car in accordance with the second preferred embodiment of the present invention. Fig. 6 is a front perspective view of the case 100a in the operational mode with the image reproducing device 2 detached from a second case body 120a. Fig. 7 provides a vertical cross sectional view thereof in the operation mode with the image reproducing device 2 extracted from the second case 120a while Fig. 8 illustrates a vertical cross sectional view of the case 100a in the operational mode with the image reproducing device retracted in the second case body 120a. Fig. 9 is a front perspective view of the case 100a in the installation mode.

As in the first preferred embodiment, the case 100a in accordance with the second preferred embodiment has the carrying mode for housing the image system mainly including the display device 1 and the image reproducing device 2 to allow it to be carried, the operational mode for allowing a user to watch the display device 1, and the installation mode in which the case 100a is detachably mounted to the backside of the seat 3 in the car and allows the user seated in the rear seat in the car to watch the display device 1.

Furthermore, as in the first preferred embodiment, the case 100a in accordance with the second preferred embodiment includes a case member 105a having a first case body 110a for housing the display device 1 detachably secured therein and the second case body 120a for housing the image reproducing device 2 detachably secured therein; the installation unit connected to at least one of the first and the second case body 110a and 120a to mount the case member 105a to the seat 3 in the car detachably; and a combining member 130a for selectively combining the first and the second case body 110a and 120a with each other. Here, the first case body 110a and the second case body 120a are rotatably connected to each other. When the first and the second case body 110a and 120a are combined with each other via the combining member 130a, they are arranged in front and rear, respectively (i.e., in a thickness direction of the case member 105a).

An upper edge of the side having the opening formed therein of the first case body 110a is rotatably connected to an upper edge of the second case body 120a. In the operational mode, the first and the second case body 110a and 120a are opened to form an angle of about 180°. That is to say, the operation angle formed between the first and the second case body 110a and 120a in the operational mode of the case 100a is about 180°.

The second case body 120a includes a pair of extracting plates 140a, which are parallel with each other and respectively installed at an upper and a lower portion of the inner surface of the second case body 120a. The image reproducing device 2 is detachably mounted to the second case body 120a via the extracting plates 140a. Each extracting plate 140a is fixed to the second case body 120a by sewing or the like, and, in order to facilitate the folding of each extracting plate 140a, three bendable portions 142a, 141a and 143a are formed at an inner portion, a central portion and an outer portion of each extracting plate 140a in a left and right direction. Furthermore, each extracting plate 140a has a connecting portion 144a at an outer end thereof. The connecting portion 144a of each extracting plate 140 is detachably coupled to the image reproducing device 2 by making fastening tapes 146 provided on an external surface of the connecting portion 144a fastened to fastening tapes 146 provided on a casing of the image reproducing device 2.

If the image reproducing device 2 is extracted forward from the second case body 120a in the operational mode, the extracting plates 140a are extended in a horizontal direction, as shown in Fig. 7, and the control panel 2a of the image reproducing device 2 is exposed out of the second case body 120a. Further, in case of retracting the image reproducing device 2 in the second case body 120a, the extracting plates 140a are folded as shown in Fig. 8 by the bending of the bendable portions 142a, 141a and 143a.

The installation unit for mounting the case member 105a to the seat 3 in the car includes at least one (two, in this preferred embodiment) mounting strap 130, a pair of rings 121a provided at a left and a right corner portion of the lower external surface of the first case body 110a and a pair of rings 111a provided at a left and a right corner portion of the upper external surface of the second case body 120a. Each mounting strap 130 has hooks 133 at both ends thereof, which can be fastened to or separated from rings 111a or 121a.

The combining member 130a for selectively combining the first and the second case body 110a and 120a with each other is preferably a zipper installed in the opened edge portions of the first and the second case body 110a and 120a that are brought into contact with each other in the carrying mode.

Hereinafter, operation of the case 100a for carrying and mounting an image system in a car in accordance with the second preferred embodiment of the present invention will be described.

First, the display device 1 is inserted into a mounting unit 160 such that the screen 1a of the display device 1 faces the front wall of the mounting unit 160. Then, the mounting unit 160 enveloping the display device 1 is detachably secured to the inner surface of the first case body 110a, and the image reproducing device 2 is detachably secured in the second case body 120a via the extracting plates 140 such that the control panel 2a of the image reproducing device 2 faces upward.

Thereafter, the first and the second case body 110a and 120a housing the display device 1 and the image reproducing device 2, respectively, are combined with each other via the combining member 130a, i.e., the zipper, such that they are arranged in front and rear, respectively. Through these steps, the mode of the case 100a for carrying and mounting an image system in a car is changed to the carrying mode. By grasping a handle 170 or by using a carrying strap (not shown) connected to rings 111a, the user can carry or move the case 100a to a desired place.

In case of changing the mode of the case 100a from the carrying mode to the installation mode, the zipper of the combining member 130a is released, and the first case body 110a is rotated from the second case body 120a at the operation angle of about 180° so that the first case body 110a and the second case body 120a are arranged in top and bottom (or a vertical direction) with respect to each other. Then, mounting straps 130 of the installation unit are connected to rings 121a secured to the first case body 110a and to the rings 111a secured to the second case body 120a, respectively, and are wounded around a headrest 3a and the seat 3, rendering the case 100a detachably mounted to the seat 3.

Thereafter, the protective flap 163 of the mounting unit 160 attached to the inner surface of the first case body 110a is opened forwardly, thereby uncovering the screen 1a of the display device 1, and the image reproducing device 2 is extracted from the second case body 120a, thereby exposing the control panel 2a thereof. Then, power is supplied to the image reproducing device 2 and the display device 1. Through these steps, the mode of the case 100a is changed from the carrying mode to the installation mode as shown in Fig. 9, allowing the user to watch the display device 1 while seated in the rear seat in the car. Further, in case the control of the image reproducing device 2 is not required, the image reproducing device 2 can be retracted into the second case body 120a again.

Further, in case of mounting the display device 1 to the headrest 3a, the mounting unit 160 is separated from the first case body 110a, and the fastening strap 165 of the mounting unit 160 is fastened to the headrest 3a.

Moreover, when the mode of the case 100a is changed into the carrying mode, the mounting straps 130 once used to secure the case member 105a of the case 100a to the seat 3 in the car are separated from the rings 121a and 111a attached to the first case body 110a and the second case body 120a, respectively, to be stored in a pocket (not shown) provided inside the first case body 110a.

As described above, when the case 100a for carrying and mounting an image system in a car in accordance with the second preferred embodiment of the present invention is in the carrying mode, the first and the second case body 110a and 120a of the case 100a are arranged in front and rear, respectively. Thus, when compared with the conventional mounting system having the display device and the image reproducing device arranged in top and bottom, the vertical length of the case 100a can be reduced, which can allow the user to carry the case 100a safely and conveniently. Furthermore, since the operation length of the zipper of the combining member 130a can be reduced, the opening of the first and the second case body 110a and 120a can be accomplished readily.

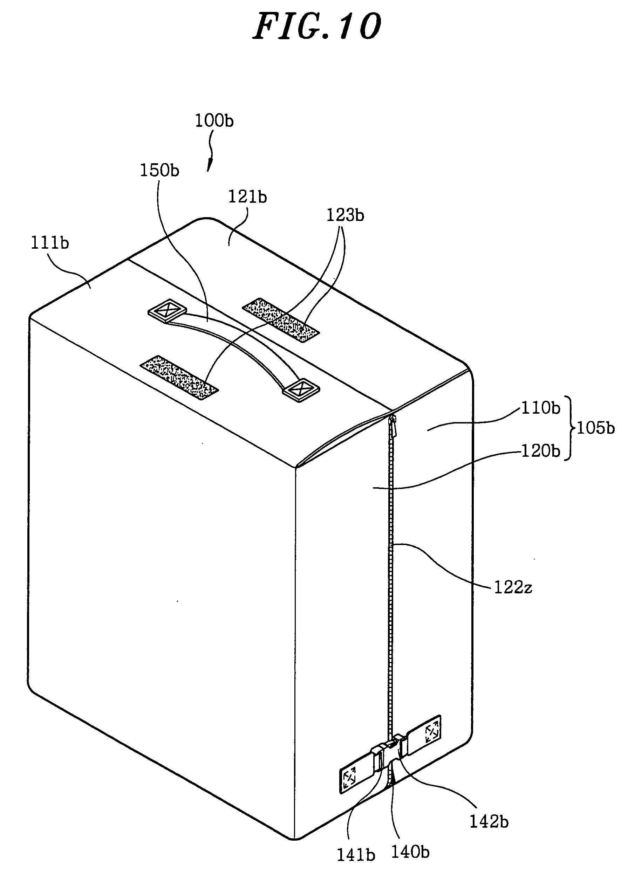

Hereinafter, a third preferred embodiment of the present invention will be described in detail with reference to Figs. 10 to 12, wherein like parts to those of the first embodiment are represented by like reference characters and detailed descriptions thereof will be omitted.

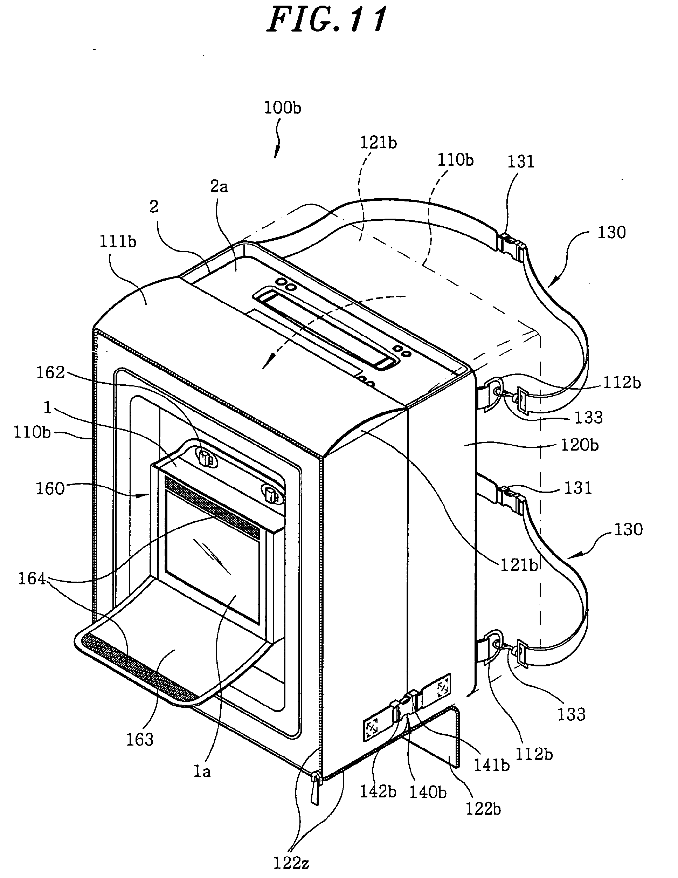

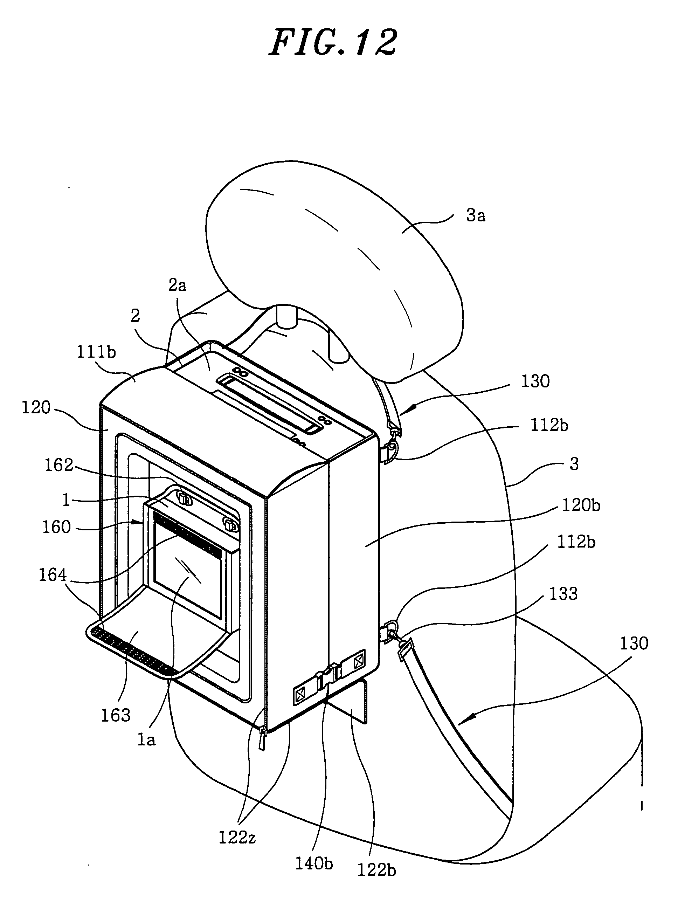

Referring to Fig. 10, there is provided a front perspective view of a case 100b for carrying and mounting an image system in a car in accordance with the third preferred embodiment, which is in the carrying mode. Fig. 11 is a front perspective view of the case 100b in the operational mode while Fig. 12 is a front perspective view of the case 100b in the installation mode.

As in the first preferred embodiment, the case 100b in accordance with the third preferred embodiment has the carrying mode for housing the image system mainly including the display device 1 and the image reproducing device 2 to allow them to be carried, the operational mode for allowing the user to watch the display device 1, and the installation mode in which the case 100b is secured to the backside of the seat 3 in the car and allows the user seated in the rear seat in the car to watch the display device 1.

Furthermore, as in the first preferred embodiment, the case 100b in accordance with the third preferred embodiment includes a case member 105b having a first case body 110b for housing the display device 1 detachably secured therein and a second case body 120b for housing the image reproducing device 2 detachably secured therein; an installation unit connected to at least one of the first and the second case body 110b and 120b to mount the case member 105b to the seat in the car detachably; and a combining member 140b for selectively combining the first and the second case body 110b and 120b with each other. Here, the first case body 110b and the second case body 120b are rotatably connected to each other. When the first and the second case body 110b and 120b are combined with each other via the combining member 140b, they are arranged in front and rear, respectively (i.e., in a thickness direction of the case member 105b).

An upper edge of the side having the opening formed therein of the first case body 110b is rotatably connected to an edge of a top side of the second case body 120b. In the operational mode, the first case body 110b is rotated from the second case body 120b at an angle of about 360°. That is to say, the operation angle formed between the first and the second case body 110b and 120b in the operational mode of the case 100b is about 360°. At this time, by designing the top side of the second case body 120b, i.e. an upper cover 111b of the second case body 120b, to be rotatable with respect to a front side of the second case body 120b, the rotating of the first case body 110b from the second case body 120b can be facilitated. Further, by configuring the upper cover 111b as described, the control panel 2a of the image reproducing device 2 can be exposed out of the second case body 120b, as shown in Fig. 11. At this time, an upper cover 121b of the first case body 110b and the upper cover 111b of the second case body 120b can be fastened to each other via fastening tapes 123b.

The installation unit for mounting the case member 105b to the seat 3 in the car includes at least one (two, in this preferred embodiment) mounting strap 130 and four rings 112b provided at four corner portions of a rear surface of the second case body 120b. Each mounting strap 103 has hooks 133 at both ends thereof, which can be fastened to or separated from the rings 112b.

The combining member 140b for selectively combining the first and the second case body 110b and 120b with each other is preferably a combining belt provided with buckle members 141b and 142b installed at lower portions of both sidewalls of the first and the second case body 110b and 120b, respectively.

Further, a handle 150b is provided on at least one of the upper covers 121b and 111b of the first case and the second case body 110b and 120b in order to allow the user to carry the case 100b conveniently. In this preferred embodiment, the handle 150b is provided on the upper cover 111b of the second case body 120b.

Hereinafter, operation of the case 100b for carrying and mounting an image system in a car in accordance with the third preferred embodiment of the present invention will be described.

First, the display device 1 is inserted into the mounting unit 160 such that the screen 1a of the display device 1 faces the front wall of the mounting unit 160. Then, the mounting unit 160 enveloping the display device 1 is mounted to the inner surface of the first case body 110b, and the front flap 122b is closed by locking a zipper 122z. Then, the image reproducing device 2 is detachably secured in the second case body 120b such that the control panel 2a of the image reproducing device 2 faces upward.

Thereafter, the first case body 110b is rotated at about 360° clockwise, sot that it is disposed behind the second case body 120b. Then, the second and the first case body 120b and 110b housing the image reproducing device 2 and the display device 1, respectively, are combined with each other via the combining member 140b, i.e., the combining belt, so that they are arranged in front and rear, respectively. Through these steps, the mode of the case 100b for carrying and mounting the image system is changed to the carrying mode. By grasping the handle 150b or by using a carrying strap (not shown) fastened to the external surface of the case member 105b, the user can carry or move the case 100b to a desired place.

In case of changing the mode of the case 100b from the carrying mode to the installation mode, the buckle members 141b and 142b of the combining belt of the combining member 140b are disconnected from each other, and the first case body 110b is rotated from the second case body 120a at the operation angle of about 360° such that the first case body 110b is located in front of the second case body 120b. The buckle members 141b and 142 of the combining belt are connected again to combine the first case body 110b and the second case body 120b. Then, mounting straps 130 of the installation unit are connected to rings 112b secured to the rear surface of the second case body 120b, and are wounded around the headrest 3a and the seat 3, rendering the case 100b detachably mounted to the seat 3. Thereafter, the front flap 122b is opened by releasing the zipper 122z of the first case body 110b and is attached to the bottom surface of the second case body 120b via fastening tapes (not shown), so that the front of the first case body 110b is opened.

Then, the protective flap 163 of the mounting unit 160 secured to the inner surface of the first case body 110b is opened forwardly, thereby uncovering the screen 1a of the display device 1. Then, power is supplied to the image reproducing device 2 and the display device 1. Through these steps, the mode of the case 100b is changed from the carrying mode to the installation mode, allowing the user to watch the display device 1 while seated in the rear seat in the car.

Further, in case of mounting the display device 1 to the headrest 3a, the mounting unit 160 is separated from the first case body 110b, and the fastening strap 165 of the mounting unit 160 is fastened to the headrest 3a.

Moreover, when the mode of the case 100b is changed to the carrying mode, the mounting straps 130 once used to secure the case member 105b of the case 100b to the seat 3 in the car are separated from the rings 112b attached to the first case body 110b to be stored in a pocket (not shown) provided inside the first case body 110b.

As described above, when the case 100b for carrying and mounting the image system in a car in accordance with the third preferred embodiment of the present invention is in the carrying mode, the second and the first case body 120b and 110b are arranged in front and rear, respectively. Therefore, when compared with the conventional mounting system having the image reproducing device and the display device arranged in top and bottom, the vertical length of the case 100b can be reduced, which can allow the user to carry the case 100b safely and conveniently. Furthermore, since the first and the second case body 110b and 120b are selectively combined with each other by means of the combining belt of the combining member 140b, opening thereof can be accomplished readily.

Hereinafter, structural modification commonly applied to the first to the third preferred embodiment of the present invention will be described.

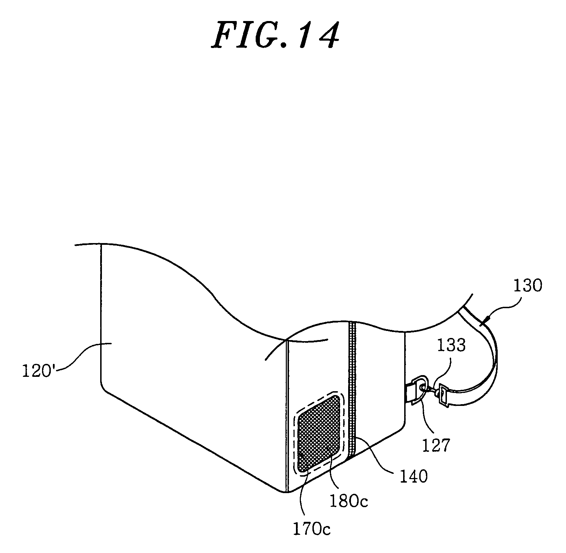

Referring to Fig. 14, there is described a partial perspective view of a case for carrying and mounting an image system in a car in accordance with a first modified embodiment of the present invention. A second case body 120' in the first modified embodiment is different from the second case body 120 of the first preferred embodiment in that it has a cooling vent 170c for facilitating the cooling of the image reproducing device 2 and a mesh 180c provided at the cooling vent 170c to prevent an introduction of foreign matters into the second case body 120' from the outside. Further, it is clear that the cooling vent 170c and the mesh 180c of the first modified embodiment can be applied to the second case bodies 120a and 120b of the second and the third preferred embodiment of the present invention, respectively, so description thereof will be omitted for simplicity.

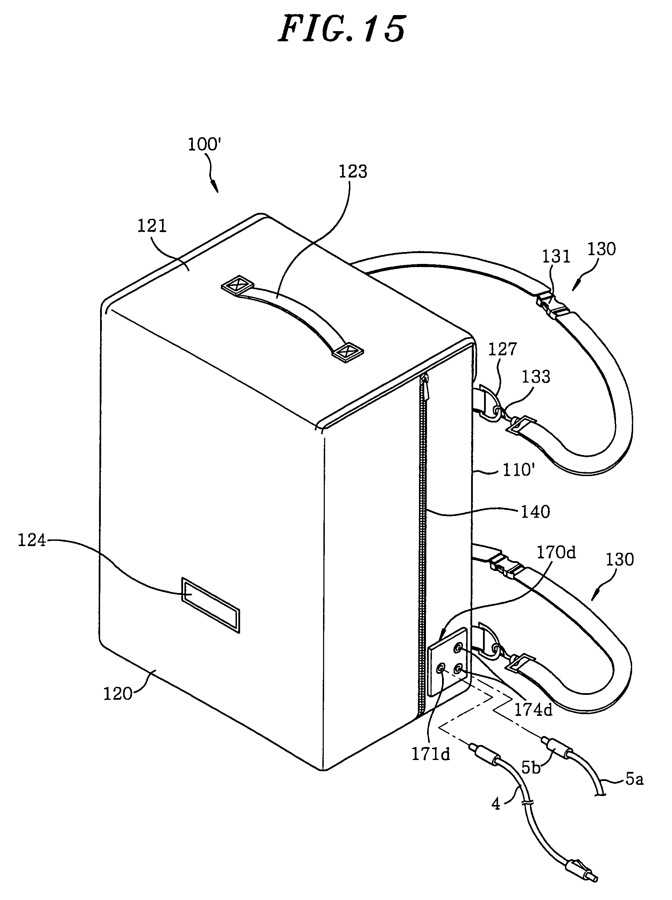

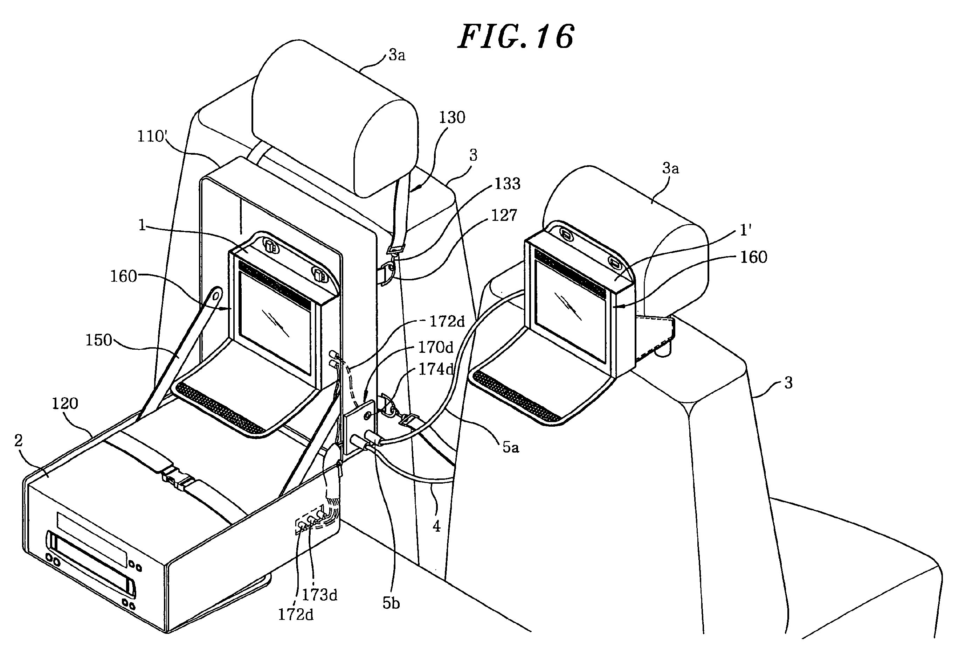

Referring to Figs. 15 and 16, there is illustrated a case 100' for carrying and mounting an image system in a car in accordance with a second modified embodiment of the present invention. A first case body 110' of the second modified embodiment is different from the first case body 110 of the first preferred embodiment in that it has a connection panel 170d for transmitting audio/video signals outputted from the image reproducing device 2 to a second display device 1' mounted outside the case 100'. The connection panel 170d has a connection terminal 171d to which an external power cable 4 is coupled and power connectors 172d for supplying power from the power cable 4 to the display device 1 and the image reproducing device 2. Furthermore, the connection panel 170d has an A/V connector 173d coupled to an A/V terminal (not shown) of the image reproducing device 2 secured in the second case body 120 and an A/V connection terminal 174d for connecting the A/V connector 173d to the second display device 1' mounted outside the case 100'. A connector 5b of an A/V cable 5a of the second display device 1' is coupled to the A/V connection terminal 174d of the connection panel 170d, so that the audio/video signals generated from the image reproducing device 2 are provided to the second display device 1'. Further, it is clear that such connection panel 170d can be applied to the first case bodies 110a and 110b of the second and the third preferred embodiment of the present invention, respectively, so description thereof will be omitted for simplicity. Moreover, it is also possible to apply the connection panel 170d in the second modified embodiment to the second case body 120, 120a or 120b of the first to the third preferred embodiment of the present invention.

Further, instead of mounting straps employed in the first to the third preferred embodiment of the present invention, other devices can be used as the element of the installation unit for releasably securing to the seat in the car the case for carrying and mounting an image system.

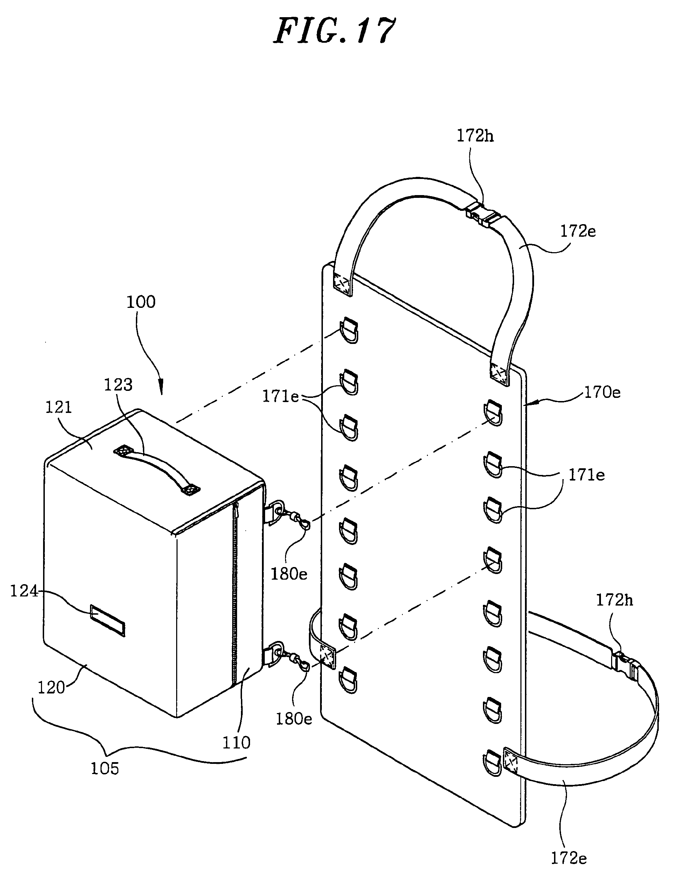

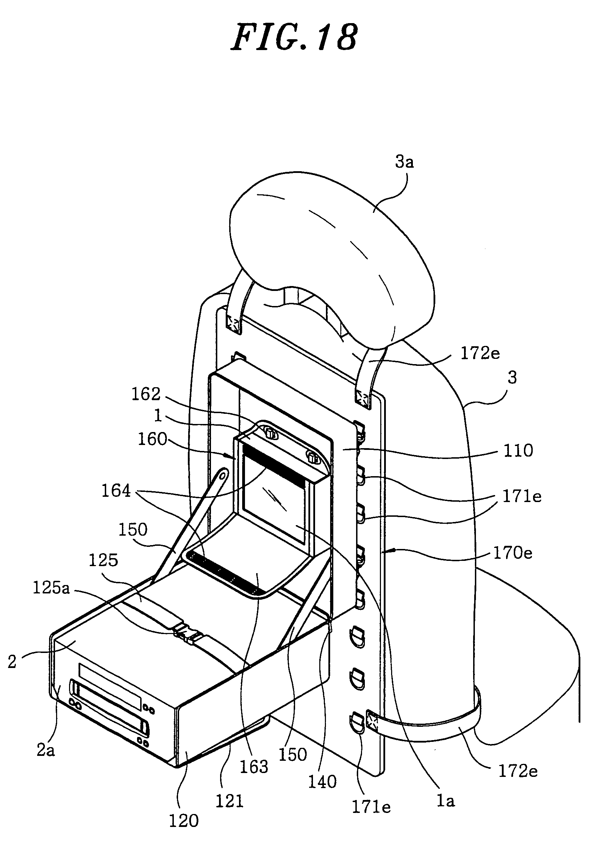

Referring to Figs. 17 and 18, there is shown an installation unit formed of a plate 170e provided with a plurality of rings 171e connected to a front surface thereof and of hooks 180e secured to the first case body 110. The rings 171e of the plate 170e are arranged in a vertical direction with a predetermined interval maintained therebetween, forming a row, and a plurality (for example, two in this modified embodiment) of rows of rings 171e are provided. Furthermore, the plate 170e is provided with a pair of mounting straps 172e respectively secured at an upper and a lower portion thereof. Each mounting strap 172e has a buckle 172h.

The plate 170e is secured to the seat 3 in the car by fastening the pair of mounting straps 172 around the headrest 3a and the seat 3. The case member 105 can be detachably secured to the plate 170e by connecting the hooks 180e provided on the case member 105 to the rings 171e of the plate 170e. Further, since the rings 171e are arranged vertically while maintaining the predetermined interval therebetween, the installation height of the case member 105 can be easily adjusted.

Though the method of using the installation unit having the plate 170e has been described with regard to the first preferred embodiment of the present invention in the above, it is clear that the method can also be applied to the second and the third preferred embodiment, and so detailed description thereof will be omitted for the simplicity of explanation.

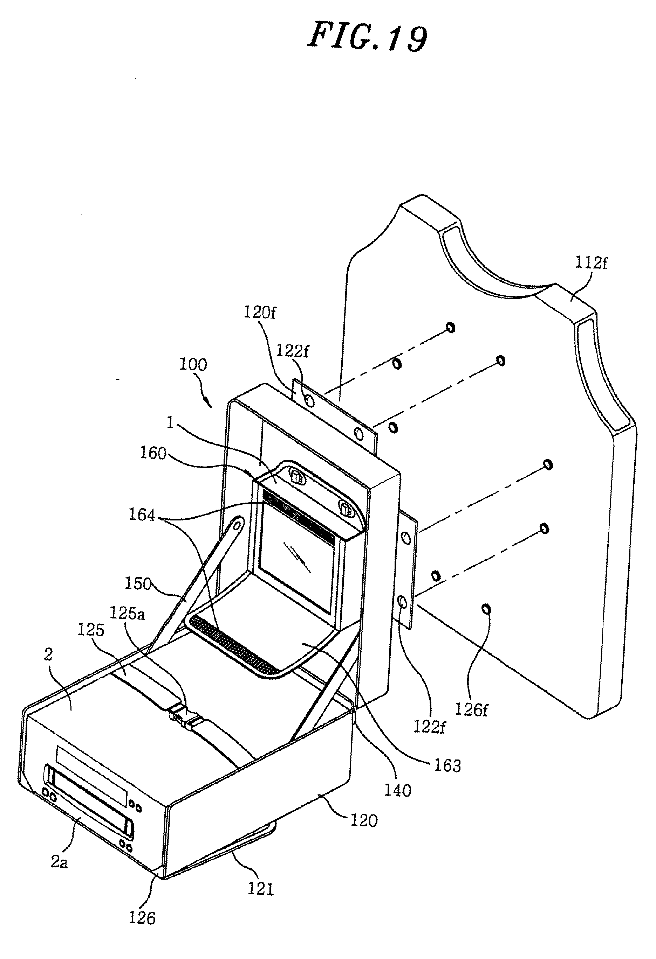

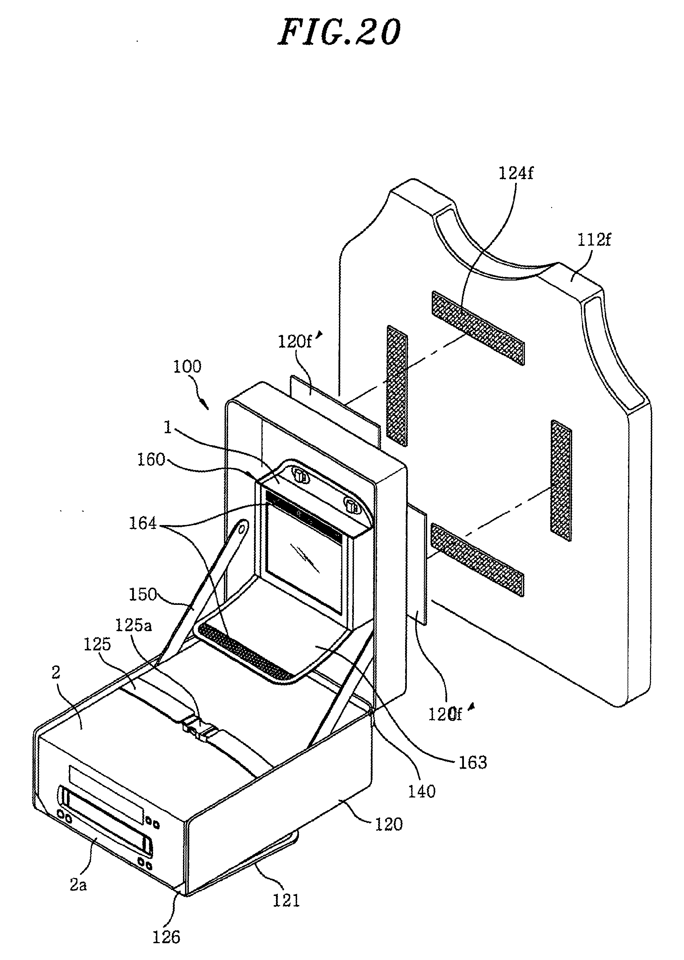

Moreover, referring to Figs. 19 to 21, there is shown an installation unit formed of a seat cover 112f for covering the seat 3 and a securing member for detachably connecting the case member to the seat cover 112f. As shown in Fig. 19, the securing member has securing flaps 120f, each having fixing holes 122f formed therein, which are attached on four edge portions of the rear surface of the case member housing the image reproducing device 2 and the display device 1, and fixing buttons 126f fixed on the seat cover 112f to correspond to the fixing holes 122f. Furthermore, as shown in Fig. 20, the securing member can also be formed of securing flaps 120f', each having a fastening tape attached on its rear surface, which are attached on four edge portions of the rear surface of the case member housing the image reproducing device 2 and the display device 1, and fastening tapes 124f fixed on the seat cover 112f.

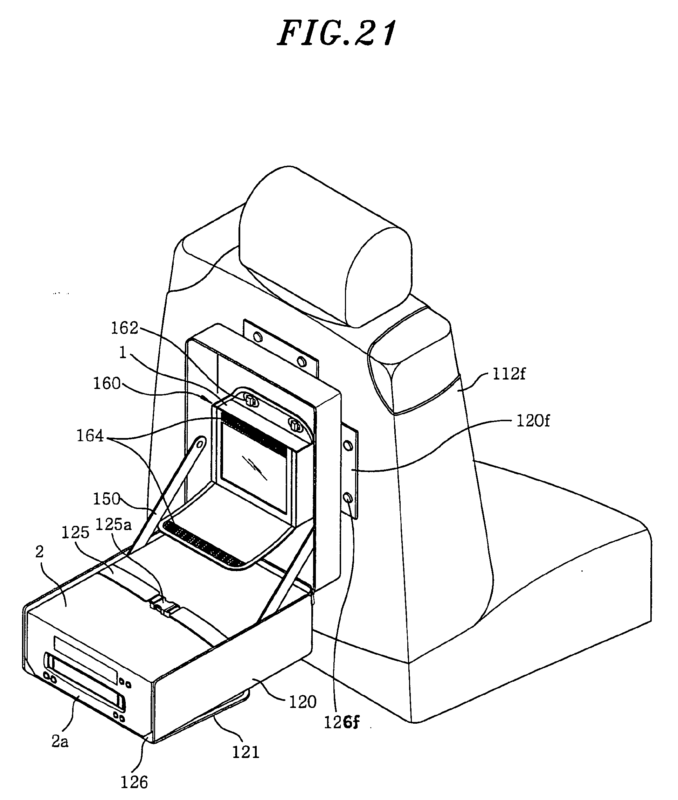

As illustrated in Fig. 21, the seat cover 112f covers the seat 3 in the car and the case member 105 is detachably attached to the seat cover 112f via the securing member.

Though the above method of using the installation unit having the seat cover 112f has been described with regard to the first preferred embodiment of the present invention, it is clear that it can also be applied to the second and the third preferred embodiment, and so detailed description thereof will be omitted for the simplicity of explanation.

Furthermore, the above-described installation units can also be applied to the first and the second modified embodiments of the present invention.

As descried above, the first and the second case body of the case for carrying and mounting an image system in accordance with the present invention are arranged in front and rear or in rear and front, respectively in the carrying mode. Therefore, when compared with the conventional mounting system having the display device and the image reproducing device arranged in top and bottom, the vertical length of the case can be reduced, which can allow a user to carry the case safely and conveniently. Moreover, since the opening operation of the combining member for selectively combining the first case body and the second case body can be reduced, the opening of the first and the second case body can be accomplished readily.

While the invention has been shown and described with respect to the preferred embodiments, it will be understood by those skilled in the art that various changes and modifications may be made without departing from the scope of the invention as defined in the following claims.

## Claims

1. A case for carrying and mounting an image system in a car, the case comprising:
a case member including a first case body for housing a display device of the image system detachably secured therein and a second case body for housing an image reproducing device of the image system detachably secured therein;
an installation unit connected to at least one of the first and the second case body to mount the case member to a seat in the car detachably; and
a combining member for selectively combining the first and the second case body with each other,
wherein the first case body and the second case body are rotatably connected to each other, and are arranged in front and rear, respectively when being combined via the combining member.

2. The case of claim 1, wherein when the case is in an operational mode for allowing an user to watch the display device, an operation angle formed between the first case body and the second case body is about 90°.

3. The case of claim 1, wherein when the case is in an operational mode for allowing an user to watch the display device, an operation angle formed between the first case body and the second case body is about 180°.

4. The case of claim 1, wherein when the case is in an operational mode for allowing an user to watch the display device, an operation angle formed between the first case body and the second case body is about 360°.

5. The case of claim 1, wherein the case member has at least one cooling vent for facilitating cooling of the image reproducing device, said at least one cooling vent being formed in a side wall of the second case body.

6. The case of claim 1, wherein the case member has at least one connection panel for transmitting audio/video signals outputted from the image reproducing device to another display device, said at least one connection panel being attached to a side wall of the first case body.

7. The case of claim 1, wherein the installation unit has a plurality of rings secured to the case member; and at least one mounting strap for being wrapped around the seat, which is connected to the rings.

8. The case of claim 1, wherein the installation unit has a plurality of hooks secured to the case member; and a plate provided with at least one strap for being wrapped around the seat, which is attached to an upper portion thereof, and a plurality of rings connected to a front surface thereof.

9. The case of claim 1, wherein the installation unit has a seat cover for covering the seat; and a securing member for connecting the case member to the seat cover detachably.
